# EUROPEAN PATENT SPECIFICATION

(11) **EP 2 819 884 B1**
(45) Date of publication and mention of the grant of the patent: **21.07.2021**
(21) Application number: 12869623.4
(22) Date of filing: 29.02.2012
(51) Int. Cl.: B60R 7/04, B60K 37/00

(54) **CENTER CONSOLE AND ASSEMBLY THEREOF**
MITTELKONSOLE UND ANORDNUNG DAFÜR
CONSOLE CENTRALE ET SON MONTAGE

(43) Date of publication of application: 07.01.2015
(73) Proprietor: Volkswagen AG, 38436 Wolfsburg (DE)
(72) Inventor: STEENBOCK, Michael, Shanghai 200063 (CN); GROSSE KOHORST, Folkwin, 49393 Lohne (DE)
(86) International application number: PCT/CN2012/071774
(87) International publication number: WO 2013/127074

(56) References cited:
- CN-Y- 201 174 255
- CN-Y- 201 174 255
- FR-A1- 2 747 347
- JP-A- H 082 290
- JP-A- 2011 195 042
- JP-A- 2011 218 848
- US-A1- 2006 060 620
- US-B1- 7 114 755
- US-B2- 6 502 888
- US-B2- 7 192 070
- US-B2- 7 690 708
- US-B2- 7 690 708

## Description

### FIELD OF THE INVENTION

The present invention relates to an assembly of a center console and an instrument panel and an automobile comprising such assembly.

### BACKGROUND OF THE INVENTION

The gap between the center console and the instrument panel is an important factor for evaluating the appearance of the automobile, and in the automobile manufacture, a consistent gap between the center console and the instrument panel in the manufactured automobiles is always a pursued goad.

In the prior art, during mounting the center console, the center console is generally rigidly connected to a frame of the instrument panel. Furthermore, the panel (such as the air conditioning operating panel) of the instrument panel adjacent to the center console is also directly fixed to the frame of the instrument panel. During the mounting of the center console, for example, due to the manufacture tolerance, it is required for the center console to be adjusted in relation to the bottom of the body. Since the panel adjacent to the center console is stationary, the adjustment of the center console in the direction of the height would change the relative position between the center console and the adjacent panel of the instrument panel, which results in an inconsistent gap between the center console and the instrument panel.

Further, when the center console is adjusted in relation to the bottom of the body, the center console may rotate around a contacting point between the center console and the instrument panel. However, for various center consoles, the positions of the contacting points between the center consoles and the instrument panels are different, that is, the rotation axis of the center console when mounting is uncertain. This would lead to the consistency of the gap between the center console and the instrument panel cannot be guaranteed.

Under some extreme situations, it is even generated that the cover of the ashtray on the center console adjacent to the instrument panel cannot be opened due to the too small gap between the center console and the instrument panel.

JP 2011 195 042 A describes a center console for an automobile.

US 2009/0179448 A1 describes a vehicle console center assembly.

US 7,114,755 B1 describes an automotive console that includes a console body adapted to be installed in the passenger compartment of a vehicle and includes a storage compartment.

CN 2011 742 55 describes a manual foldable navigator bracket.

FR 2747347 describes a dashboard for a vehicle.

US 2006/0060620 A1 describes an automotive center stack panel assembly.

US 2006/0108816 A1 describes a console for a vehicle including a body defining a compartment and an opening therein.

### SAMMURY OF THE INVENTION

The present invention specifically provides the solution to the above existing problems.

In particular, the inventon has the object to find a connection between center console and instrumental panel that grooves and gaps between instrumental panel (e.g. operating panel as blend and air conditioning operating panel) and center console and ashtray do not vary, so that there is a good optical appearance and a good handling.

According to an example, which is not part of the invention, a center console exists, which on one end is provided with a connecting part for connecting with another automobile part (such as the instrument panel), the connecting part is configured to be able to be rotatably connected to the another automobile part around a defined rotation axis. Therefore, although the center console rotates when mounting, the relative position between the center console and the another automobile part (such as the instrument panel) always keeps unchanged, so that a consistent gap between the center console and the another automobile part (such as the instrument panel) can be achieved.

In particular, the connecting part is configured as a clamping means with a substantially U-shaped groove for being rotatably connected to said another automobile part, the opening of the groove faces upwardly. In this case, the center console can clamped into a pivot pin of the another automobile part (such as the instrument panel) from down to up, thus not only the center console can be easily mounted, but also the downwardly extending portion of the another automobile part (such as the instrument panel) covers their connecting portion, and the gap between the center console and the another automobile part (such as the instrument panel) can be covered, so an aesthetic, high quality appearance of the automobile can be achieved. Certainly, it can be conceived that the connecting part is configured as a cylindrical pivot pin.

In particular, an arc segment is provided on the surface of the groove. Therefore, it can be achieved with a simple structure that the center console is rotatably connected to the another automobile part around a defined rotation axis.

In one aspect, the present invention relates to an assembly of an instrument panel and a center console for an automobile according to the claims. In particular, the assembly comprises: the instrument panel and the center console, wherein the instrument panel is fixed on a frame of the instrument panel, the center console can be rotatably connected to the frame of the instrument panel around a defined rotation axis, wherein a first connecting part is a cylindrical pivot pin, and a second connecting part has a clamping means with a groove which matches the contour of the pivot pin and in that the first connecting part which defines said defined rotation axis is provided on the frame of the instrument panel, and the center console on an end adjacent to the instrument panel has the second connecting part, and the center console is configured to be upwardly mounted, and a downwardly extension of the instrument panel is configured to cover a connecting portion and a gap between the center console and the instrument panel.

Since the center console is rotated around a defined rotation axis when adjusting, the relative position of the center console and the instrument panel keeps unchanged, thus a consistent gap between the center console and the instrument panel can be guaranteed. Preferably, a first connecting part for defining said defined rotation axis is provided on the frame of the instrument panel, and a second connecting part is provided on one end of the center console adjacent to the instrument panel. Wherein, the first connecting part and the second connecting part can match with each other, thus the center console being rotatably connected on the instrument panel is achieved. The first and second connecting parts, for example, can be respectively configured as a hinge part, and they together form a hinge connection. Particularly preferably, the first connecting part is a cylindrical pivot pin, and the second connecting part has a clamping means with a groove which matches the contour of the pivot pin. The cylindrical pivot pin disposed on the frame of the instrument panel determines the rotation axis of the center console in a simply way, and the groove of the clamping means of the center console can achieve a simple mounting of the center console.

Preferably, the groove of the clamping means of the center console has a substantially U shape, and an arc segment, which matches the contour of the pivot pin, is provided on the surface of the groove of the clamping means. Particularly preferably, the opening of the groove faces upwardly. Thereby, when mounting the center console, the opening of the groove of the clamping means is aligned upwardly with the pivot pin on the frame of the instrument panel, and then the center console is upwardly pushed, and the two side arms forming the groove is elastically deformed and expanded, thus the arc segment on the surface of the groove of the clamping means is pushed into a position where the arc segment is engaged with the pivot pin. Since the center console can be upwardly mounted, the downwardly extending portion of the instrument panel can cover their connecting portion, and the gap between the center console and the instrument panel can be covered, so an aesthetic, high quality appearance of the automobile can be achieved.

Preferably, the instrument panel comprises an operating panel (such as an air conditioning operating panel) adjacent to the center console, the operating panel can be rotatably connected to the frame of the instrument panel around a defined rotation axis. In this case, even though the other parts of the center console have considerably big tolerance and deform when mounting, the consistence of the gap between the center console and the instrument panel would not be influenced. Particularly preferably, the operating panel and the center console are rotatably connected to the frame of the instrument panel around a common rotation axis. In this case, the dimension of the gap between the center console and the instrument panel can be exactly determined.

Preferably, the operating panel is fixed on a holder, which can be rotatably connected to the frame of the instrument panel around a defined rotation axis, that is to say, the operating panel is rotatably connected to the frame of the instrument panel via the holder.

With help of holder the operating panel (air conditioning operating panel and blend) will be rotatable. The holder is fixed to the center console. So operating panel will follow the movement of the center console.

Moreover an advantage of the holder lies in that, for different types of the automobiles, when it is required to change the type of the operating panel adjacent to the center console (e.g. an air conditioning operating panel is changed into a DVD operating panel), there is no need to change the connecting structure of the operating panel, so that an excellent extendable performance of the instrument panel is realized, which is especially preferred in mass production.

Preferably, the holder and the center console are rotatably connected to the frame of the instrument panel around a common rotation axis. In this case, the dimension of the gap between the center console and the instrument panel can be exactly determined.

According to another example, which is not part of the invention, a holder for an operating panel of an instrument panel exists, the operating panel being adjacent to a center console, the holder has a connecting part which can be rotatably connected to the frame of the instrument panel around a defined rotation axis. The advantage of the holder is that operating panel can be moved with center console. Further, for different types of the automobiles, when it is required to change the type of the operating panel adjacent to the center console (e.g. an air conditioning operating panel is changed into a DVD operating panel), there is no need to change the connecting structure of the operating panel, so that an excellent extendable performance of the instrument panel is realized, which is especially preferred in mass production.

In another aspect, the disclosure relates to an automobile, which has an assembly of an instrument panel and a center console.

### BRIEF DESCRIPTION OF THE DRAWINGS

Embodiments of the invention will be explained in detail below with reference to the drawings, in which:
FIG. 1 shows a partially perspective view of an assembly of an instrument panel and a center console of the prior art;
FIG. 2 shows a partially perspective view with a gap between the instrument panel (blend of operating panel) and the center console;
FIG. 3 shows a partially perspective view with a too big gap between the instrument panel (blend of operating panel) and the center console (ashtray);
FIGs. 4a-4c show the mounting procedure of a rotatable holder;
FIG. 5a and 5b shows a partially perspective view and a sectional view of an operating panel adjacent to the center console, which is mounted to the instrument panel via the holder;
FIG. 6 shows a partially perspective view of the center console before being connected to the instrument panel;
FIG. 7 shows a partially sectional view of a groove of a clamping means of the center console before being mounted to a pivot pin on a frame of the instrument panel;
FIG. 8a, 8b and 8c show a partially front view of the assembly and two partially sectional views of a groove of a clamping means of the center console after being mounted to a pivot pin on a frame of the instrument panel;
FIG. 9 shows an enlarged view of the lower hook of the center console;
FIG. 10 shows a perspective view of the center console being connected with the holder through screws after being adjusted; FIG. 11 shows an enlarged view of a detail X of Fig. 10;
FIG. 12 shows a partially perspective view of the holder being fixed on the frame of the instrument panel through screws after being adjusted;
FIG. 13 shows an enlarged sectional view of Fig. 12, which is cut away along line A- A;
FIG. 14 shows the mounting process of the parts of the assembly of the instrument panel and the center console.

### DETAILED DESCRIPTION OF THE DRAWINGS

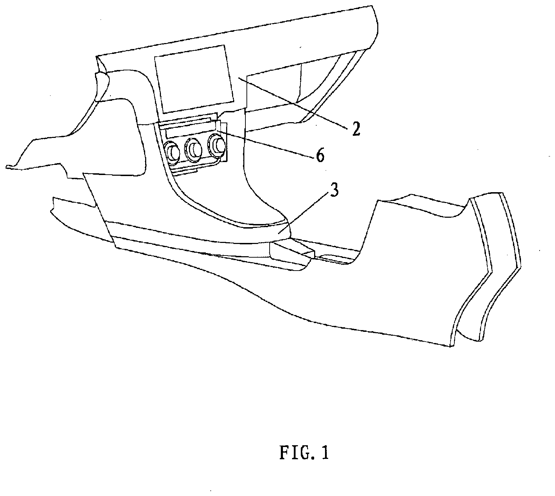

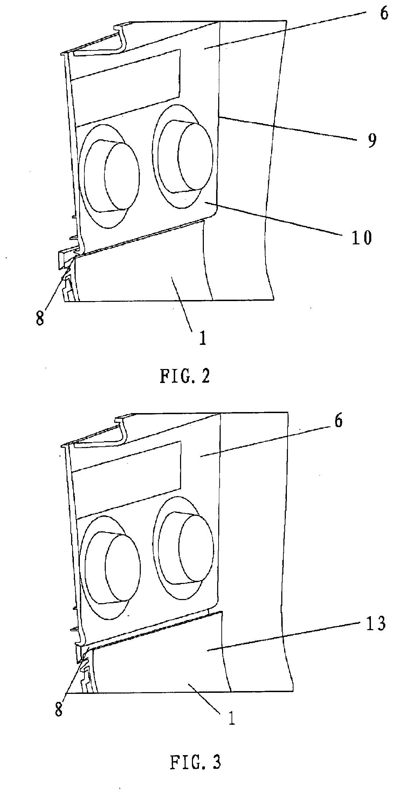

As shown in Fig. 1, in the prior art, the air conditioning operating panel 6 adjacent to a center console is a part of instrumental panel und is screwed (and therefore fixed) on a frame 3 of the instrumental panel. The center console 1 is to be fixed on the instrumental panel 2, namely the center console is rigidly connected to the frame 3 of the instrumental panel 2. The center console will be fixed on the bottom on the car. Because there are tolerances in the bottom, there must be a compensation in height. However, because air conditioning operating panel 6 and blend are fixed and center console 1 is fixed on bottom with tolerances, it leads to two following problem: 1) the groove between blend of the operating panel 6 and center console 1 is not identical, there is a variation in gap 9 (see Fig. 2). 2) There is a gap 8 between blend of air conditioning operating panel 6 and ashtray. This leads to the fact that the ashtray cannot be opened smoothly (see Fig. 3). This also makes the evaluating standard of the automobile appearance unachievable.

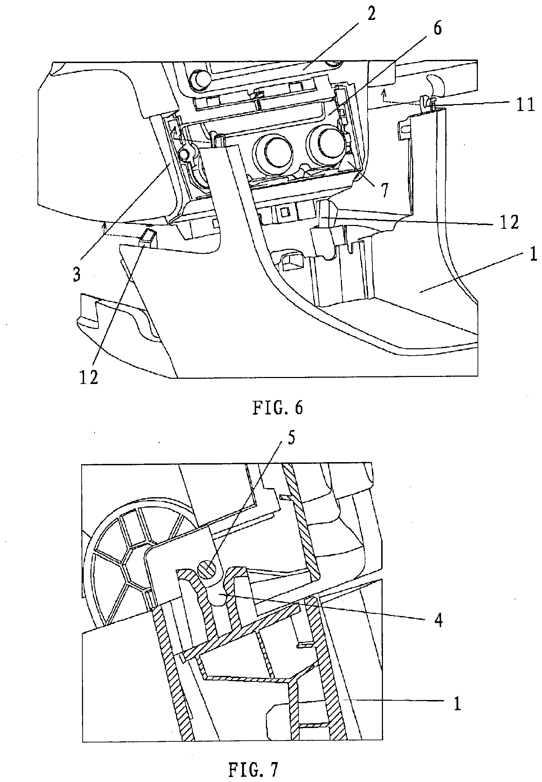

Fig. 6 shows an improved center console 1 with respect to the prior art. The center console 1 could be rotatably fixed to the frame 3 of the instrumental panel 2. Since a connecting part for connecting with another automobile part (such as the instrument panel 2) is provided on one end of the center console 1, the connecting part can be rotatably connected to the another automobile part around a defined rotation axis. In this embodiment, there are two upper hooks 11 on each end of center console 1, which can form a clip connection (snap-in-lock). Therefore, although the center console 1 rotates when mounting, the relative position between the center console 1 and the another automobile part (such as the instrument panel 2) always keeps unchanged, so that a consistent gap 8 between the center console and the another automobile part (such as the instrument panel) can be achieved.

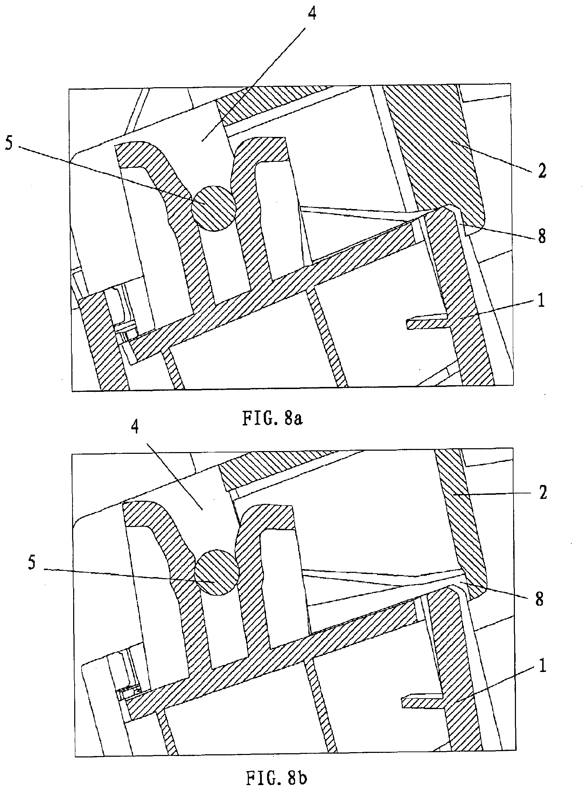

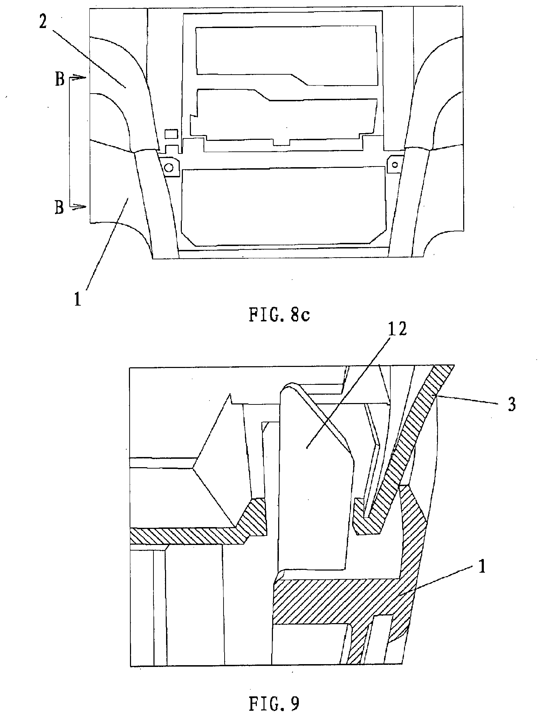

As shown in Fig. 7, the connecting part of the center console 1 has a clamping means with a substantially U-shaped groove 4, the opening of the groove 4 faces upwardly. An arc segment is provided on the surface of the groove 4 of the clamping means. A cylindrical pivot pin 5 is provided on the frame 3 of the instrument panel, and the contour of the pivot pin and the contour of the arc segment on the surface of the groove 4 are match with each other. Since the opening of the groove 4 faces upwardly, when mounting the center console, the opening of the groove 4 of the clamping means is aligned upwardly with the pivot pin 5 on the frame 3 of the instrument panel, and then the center console 1 is upwardly pushed, and the two side arms forming the groove 4 are elastically deformed and expanded, thus the arc segment on the surface of the groove of the clamping means is pushed into a position where the arc segment is engaged with the pivot pin 5. Since the center console 1 is upwardly mounted, the downwardly extending portion of the instrument panel 2 covers their connecting portion, and the gap 8 between the center console and the instrument panel can be covered, namely because of the clip connection from down to up, an insertion is possible with a hidden groove between the ends of center console and instrumental panel. The positive result is a zero groove (see Figs. 8a and 8b), so an aesthetic, high quality appearance of the automobile can be achieved. Certainly, it can be understood that, the cylindrical pivot pin 5 can be also configured on the center console 1, and the groove 4 of the clamping means can be disposed on the frame 3 of the instrument panel. In this case, the opening of the groove 4 disposed on the frame 3 of the instrument panel faces downwardly. Certainly, it can be conceived that, the connecting part on the frame 3 of the instrument panel and the connecting part of the center console 1, for example, can be respectively configured as a hinge part, and they together form a hinge connection.

The center console also includes two lower hooks 12 (see Fig. 6 and 9). Theses hooks are pressed against the inner wall of instrumental panel after installation. Therefore, the sidewall of center console will be pressed against the wall of instrumental panel at each rotating angle.

An operating panel 6 (such as an air conditioning operating panel) of the instrument panel 2 adjacent to the center console can be rotatably connected to the frame 3 of the instrument panel around a defined rotation axis. Therefore, even though the other parts of the center console have considerably big tolerance and deform when mounting, the consistence of the gap between the center console 1 and the instrument panel 2 would not be influenced. Particularly, the operating panel 6 and the center console 1 are rotatably connected to the frame 3 of the instrument panel around a common rotation axis. In this case, the dimension of the gap 8 between the center console 1 and the instrument panel 2 can be exactly determined.

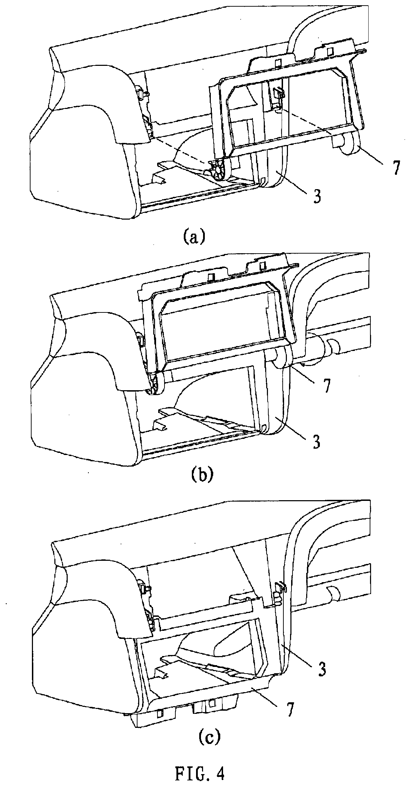

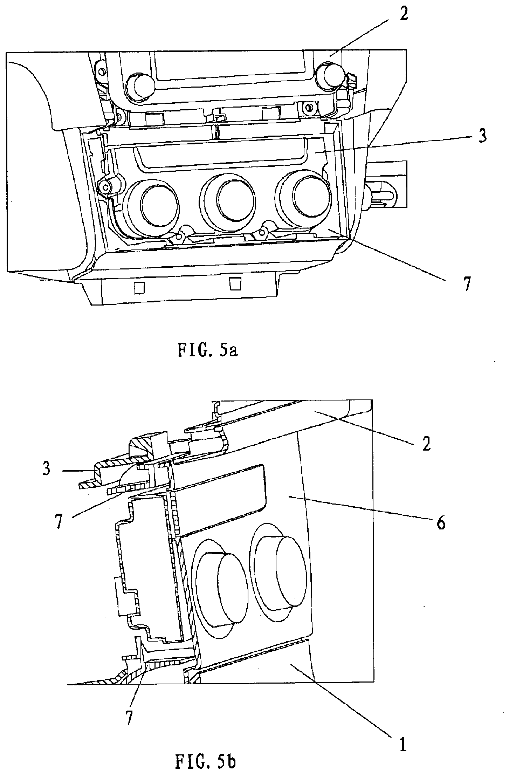

In particular, as shown in Fig. 5, the operating panel 6 adjacent to the center console 1 is connected to the frame 3 of the instrument panel by means of a rotatable holder 7. With help of holder, air conditioning operating panel 2 and blend 10 will be rotatable. In particular, the rotation axes of holder and the center console are identical. The advantage of holder is that air conditioning operating panel will follow the movement of center console by help of holder. Therefore, the seen gaps will be identical. The holder has a frame-like shape. A connecting part for rotatably connecting with the frame 3 of the instrument panel is provided on the holder 7. The connecting part has a radial extending groove for receiving a pin on the frame 3 of the instrument panel. The mounting procedure of the holder is shown in Figs. 4a-4c: the groove of the connecting part on the holder 7 is firstly aligned with the pin on the frame 3 of the instrument panel (Fig. 4a). Then, the holder 7 is so pushed that the pin on the frame 3 of the instrument panel is engaged with the connecting part of the holder 7 (Fig. 4b), and then the holder 7 can be downwardly rotated around the pin on the frame 3 of the instrument panel. Thereby, the holder 7 can be rotatably connected to the frame 3 of the instrument panel around a defined rotation axis. Another advantage of the holder is, for different types of the automobiles, when it is required to change the type of the operating panel 6 adjacent to the center console 1 (e.g. an air conditioning operating panel is changed into a DVD operating panel), there is no need to change the connecting structure of the operating panel, so that an excellent extendable performance of the instrument panel 2 is realized, which is especially preferred in mass production. In particular, the holder 7 and the center console 1 are rotatably connected to the frame 3 of the instrument panel around a common rotation axis.

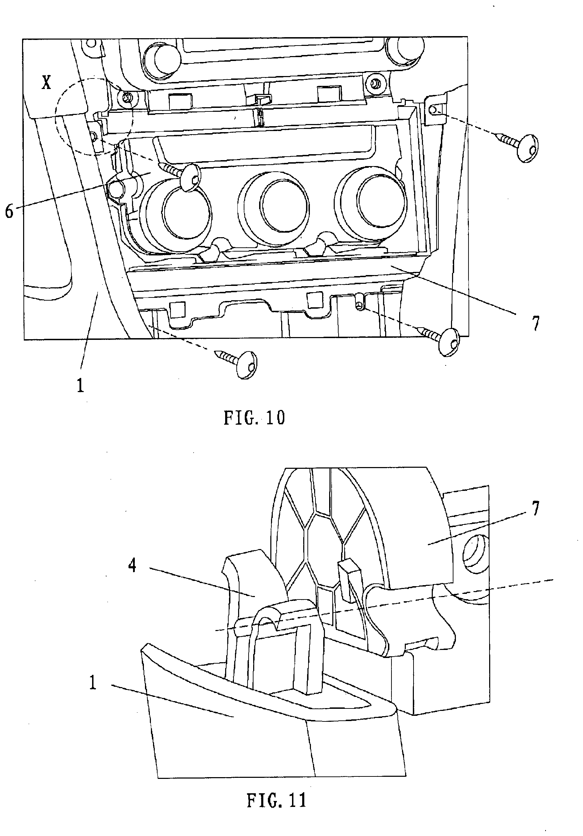

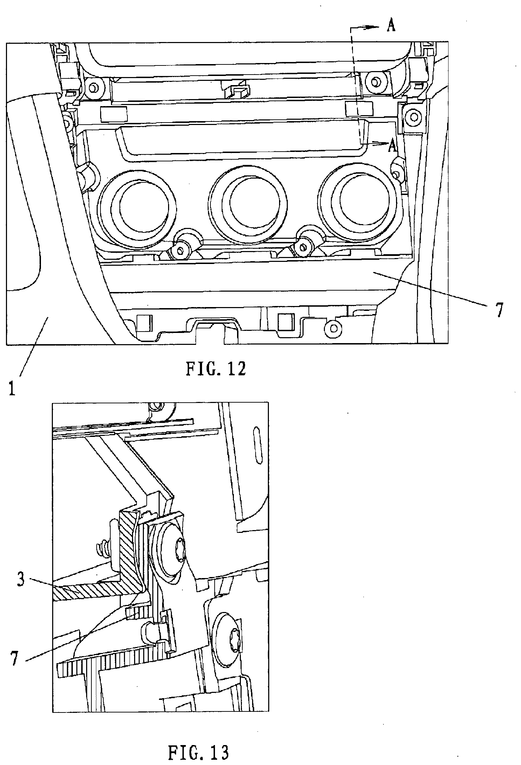

As shown in Fig. 10, after the center console 1 is rotatably connected to the pivot pin 5 of the frame 3 of the instrument panel, the center console 1 is connected with the holder 7 through screws, then the center console 1 and the holder 7 can be rotated together around a common rotation axis (see Fig. 11), so the center console is adjusted in relation to the bottom of the body. After the screw hole on the center console 1 is aligned with the screw hole on the bottom of the body, the screws are screwed in, so as to make the center console 1 fix on the bottom of the body. Then, the holder 7 is fixed on the frame 3 of the instrument panel through screws (see Figs. 12 and 13). After that, the ashtray, the baffle of the air conditioning panel, and the main baffle of the instrument panel are in turn mounted.

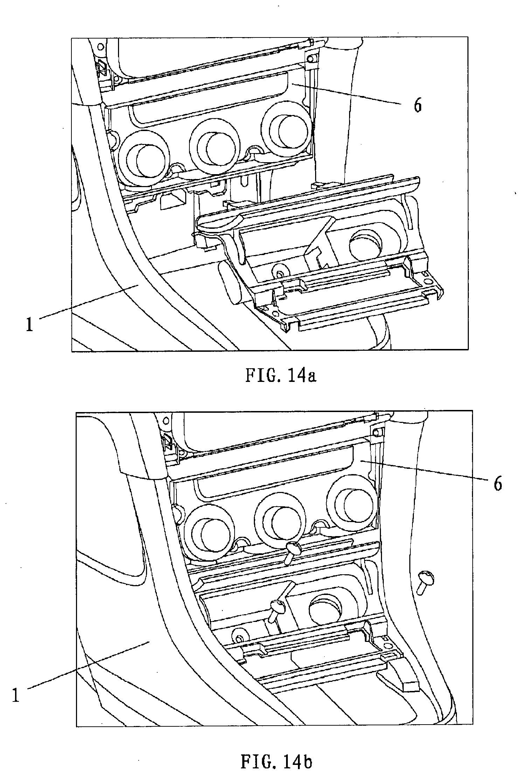

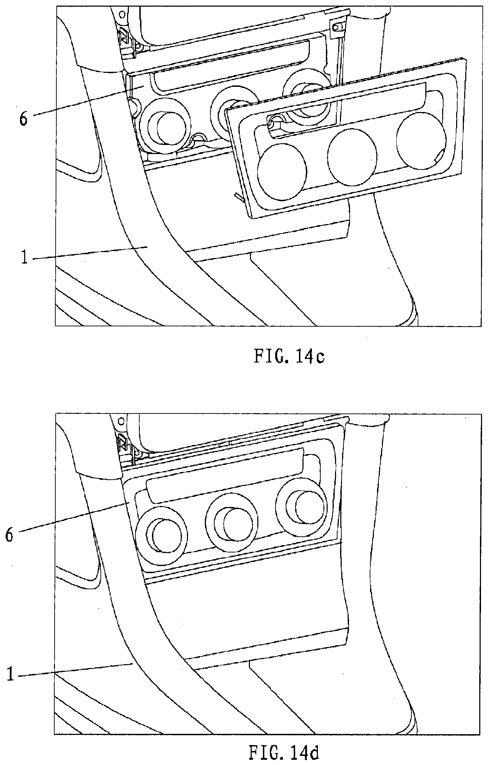

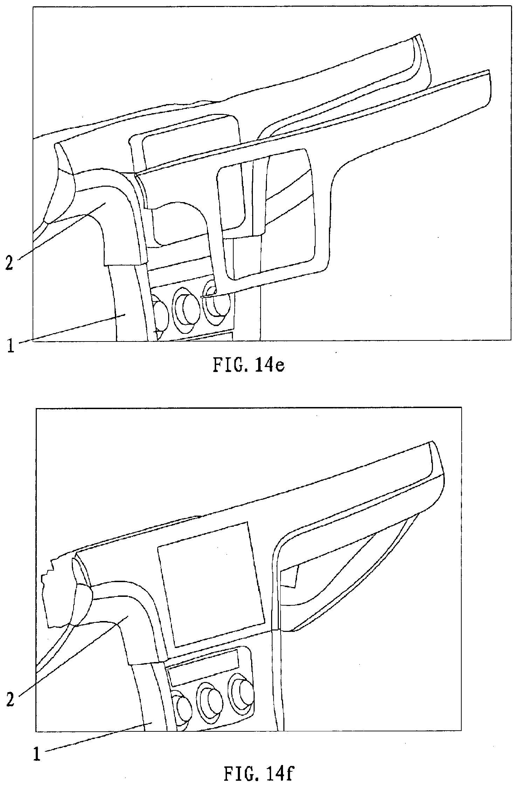

Generally speaking, the mounting procedure of the assembly of the instrument panel and the center console is as follows:
1. the holder 7 is rotatably mounted onto the frame 3 of the instrument panel (see Figs. 4a-4b);
2. the operating panel (such as the air conditioning operating panel) is arranged in the holder;
3. the center console 1 is rotatably connected to the frame 3 of the instrument panel;
4. the holder 7 is fixed on the center console 1 through screws, thereby the center console, the holder and the air conditioning operating panel can be rotated together around a common rotation axis; in this case, even if the center console is rotated, the gap between the center console and the instrument panel keeps unchanged;
5. although of the rotating of the center console the gap between center console and instrumental panel keeps hidden;
6. the screw holes of the center console are aligned with the screw holes of the bottom of the body by rotating the center console, and then the center console is fixed on the bottom of the body by means of screws;
7. the holder 7 is fixed on the instrument panel be means of screws (see Figs. 12 and 13);
8. the ashtray is mounted onto the center console (see Fig. 14a);
9. the baffle of the air conditioning operating panel is mounted (see Fig. 14b);
10. the main baffle of the instrument panel is mounted (see Fig. 14c).

### LIST OF REFERENCE NUMERALS

- 1: center console
- 2: instrument panel
- 3: frame of instrument panel
- 4: groove of clamping means
- 5: pivot pin
- 6: operating panel
- 7: holder
- 8: gap
- 9: gap
- 10: blend
- 11: upper hook
- 12: lower hook
- 13: cover of ashtray

## Claims

1. An assembly of an instrument panel and a center console (1) for an automobile, comprising:
the instrument panel (2) and the center console (1), wherein the instrument panel (2) is fixed on a frame (3) of the instrument panel (2), wherein the center console (1) can be rotatably connected to the frame (3) of the instrument panel around a defined rotation axis, **characterized in that** a first connecting part is a cylindrical pivot pin (5), and a second connecting part has a clamping means with a groove (4) which matches the contour of the pivot pin (5) and **in that** the first connecting part which defines said defined rotation axis is provided on the frame (3) of the instrument panel, and the center console (1) on an end adjacent to the instrument panel (2) has the second connecting part, and the center console (1) is configured to be upwardly mounted, and a downwardly extension of the instrument panel (2) is configured to cover a connecting portion and a gap (8) between the center console (1) and the instrument panel (2).

2. An assembly according to claim 1, **characterized in that** the groove (4) of the clamping means of the center console (1) has a substantially U shape, and an arc segment, which matches the contour of the pivot pin (5), is provided on the surface of the groove of the clamping means.

3. An assembly according to claim 1, **characterized in that** the groove (4) of the clamping means has a substantially U shape, and the opening of the groove (4) faces upwardly.

4. An assembly according to any one of claims 1 to 3, **characterized in that** the instrument panel (2) comprises an operating panel (6) adjacent to the center console, the operating panel being rotatably connected to the frame (3) of the instrument panel around a defined rotation axis.

5. An assembly according to claim 4, **characterized in that** the operating panel (6) and the center console (1) are rotatably connected to the frame (3) of the instrument panel around a common rotation axis.

6. An assembly according to claim 4, **characterized in that** the operating panel is fixed on a holder (7), which can be rotatably connected to the frame (3) of the instrument panel around a defined rotation axis.

7. An assembly according to claim 6, **characterized in that** the holder (7) and the center console (1) are rotatably connected to the frame (3) of the instrument panel around a common rotation axis.

8. An assembly according to claim 6, **characterized in that** the rotation axis of the holder (7) and the rotation axis of the center console (1) are coaxial.

9. An automobile, **characterized in that** the automobile has an assembly (2) according to any one of claims 1 to 8.

## Patentansprüche

1. Anordnung einer Instrumententafel und einer Mittelkonsole (1) für ein Kraftfahrzeug, die Folgendes umfasst: die Instrumententafel (2) und die Mittelkonsole (1), wobei die Instrumententafel (2) an einem Rahmen (3) der Instrumententafel (2) befestigt ist, wobei die Mittelkonsole (1) um eine definierte Drehachse drehbar mit dem Rahmen (3) der Instrumententafel verbunden sein kann, **dadurch gekennzeichnet, dass** ein erster Verbindungsteil ein zylindrischer Drehzapfen (5) ist und dass ein zweiter Verbindungsteil ein Klemmmittel mit einer Nut (4) aufweist, die zur Kontur des Drehzapfens (5) passt, und dadurch, dass der erste Verbindungsteil, der die definierte Drehachse definiert, am Rahmen (3) der Instrumententafel bereitgestellt ist und dass die Mittelkonsole (1) an einem Ende angrenzend an die Instrumententafel (2) den zweiten Verbindungsteil aufweist, und dass die Mittelkonsole (1) dazu ausgelegt ist, nach oben montiert zu werden, und wobei eine nach unten gerichtete Verlängerung der Instrumententafel (2) dazu ausgelegt ist, einen Verbindungsteil und eine Lücke (8) zwischen der Mittelkonsole (1) und der Instrumententafel (2) zu bedecken.

2. Anordnung nach Anspruch 1, **dadurch gekennzeichnet, dass** die Nut (4) des Klemmmittels der Mittelkonsole (1) im Wesentlichen eine U-Form aufweist und dass ein Bogensegment, das zur Kontur des Drehzapfens (5) passt, auf der Oberfläche der Nut des Klemmmittels bereitgestellt ist.

3. Anordnung nach Anspruch 1, **dadurch gekennzeichnet, dass** die Nut (4) des Klemmmittels im Wesentlichen eine U-Form aufweist und dass die Öffnung der Nut (4) nach oben zeigt.

4. Anordnung nach einem der Ansprüche 1 bis 3, **dadurch gekennzeichnet, dass** die Instrumententafel (2) eine Bedientafel (6) angrenzend an die Mittelkonsole umfasst, wobei die Bedientafel um eine definierte Drehachse drehbar mit dem Rahmen (3) der Instrumententafel verbunden ist.

5. Anordnung nach Anspruch 4, **dadurch gekennzeichnet, dass** die Bedientafel (6) und die Mittelkonsole (1) um eine gemeinsame Drehachse drehbar mit dem Rahmen (3) der Instrumententafel verbunden sind.

6. Anordnung nach Anspruch 4, **dadurch gekennzeichnet, dass** die Bedientafel an einem Halter (7) befestigt ist, der um eine definierte Drehachse drehbar mit dem Rahmen (3) der Instrumententafel verbunden sein kann.

7. Anordnung nach Anspruch 6, **dadurch gekennzeichnet, dass** der Halter (7) und die Mittelkonsole (1) um eine gemeinsame Drehachse drehbar mit dem Rahmen (3) der Instrumententafel verbunden sind.

8. Anordnung nach Anspruch 6, **dadurch gekennzeichnet, dass** die Drehachse des Halters (7) und die Drehachse der Mittelkonsole (1) koaxial sind.

9. Kraftfahrzeug, **dadurch gekennzeichnet, dass** das Kraftfahrzeug eine Anordnung (2) nach einem der Ansprüche 1 bis 8 aufweist.

## Revendications

1. Ensemble d'un tableau de bord et d'une console centrale (1) pour une automobile, comprenant : le tableau de bord (2) et la console centrale (1), dans lequel le tableau de bord (2) est fixé sur un cadre (3) du tableau de bord (2), dans lequel la console centrale (1) peut être raccordée de façon rotative au cadre (3) du tableau de bord autour d'un axe de rotation défini, **caractérisé en ce qu'**une première partie de raccordement est une goupille de pivotement cylindrique (5), et une seconde partie de raccordement a un moyen de serrage avec une rainure (4) qui correspond au contour de la goupille de pivotement (5) et **en ce que** la première partie de raccordement qui définit ledit axe de rotation défini est prévue sur le cadre (3) du tableau de bord, et la console centrale (1) sur une extrémité adjacente au tableau de bord (2) a la seconde partie de raccordement, et la console centrale (1) est configurée pour être montée vers le haut, et une extension vers le bas du tableau de bord (2) est configurée pour couvrir une portion de raccordement et un espace (8) entre la console centrale (1) et le tableau de bord (2).

2. Ensemble selon la revendication 1, **caractérisé en ce que** la rainure (4) du moyen de serrage de la console centrale (1) a une forme sensiblement de U, et un segment d'arc, qui correspond au contour de la goupille de pivotement (5), est prévu sur la surface de la rainure du moyen de serrage.

3. Ensemble selon la revendication 1, **caractérisé en ce que** la rainure (4) du moyen de serrage a une forme sensiblement de U, et l'ouverture de la rainure (4) est tournée vers le haut.

4. Ensemble selon l'une quelconque des revendications 1 à 3, **caractérisé en ce que** le tableau de bord (2) comprend un panneau de commande (6) adjacent à la console centrale, le panneau de commande étant raccordé de façon rotative au cadre (3) du tableau de bord autour d'un axe de rotation défini.

5. Ensemble selon la revendication 4, **caractérisé en ce que** le panneau de commande (6) et la console centrale (1) sont raccordés de façon rotative au cadre (3) du tableau de bord autour d'un axe de rotation commun.

6. Ensemble selon la revendication 4, **caractérisé en ce que** le panneau de commande est fixé sur un élément de retenue (7), qui peut être raccordé de façon rotative au cadre (3) du tableau de bord autour d'un axe de rotation défini.

7. Ensemble selon la revendication 6, **caractérisé en ce que** l'élément de retenue (7) et la console centrale (1) sont raccordés de façon rotative au cadre (3) du tableau de bord autour d'un axe de rotation commun.

8. Ensemble selon la revendication 6, **caractérisé en ce que** l'axe de rotation de l'élément de retenue (7) et l'axe de rotation de la console centrale (1) sont coaxiaux.

9. Automobile, **caractérisée en ce que** l'automobile a un ensemble (2) selon l'une quelconque des revendications 1 à 8.
